# EUROPEAN PATENT APPLICATION

(11) **EP 2 923 792 A1**
(43) Date of publication of application: **30.09.2015**
(21) Application number: 14162000.5
(22) Date of filing: 27.03.2014
(51) Int. Cl.: B23K 26/28, B23K 26/34

(54) **Component, laser-welding apparatus and method for manufacturing a laser-welded joint**

(71) Applicant: Continental Automotive GmbH, 30165 Hannover (DE)
(72) Inventor: Izzo, Ivano, 56127 Pisa (IT); Fierro, Maria Carmela, 56127 Pisa (IT)

(57) **Abstract**

A component (1) comprising a first body (10), a second body (12) and a weld seam (14) is disclosed. The weld seam (14) has a main section (16) which adjoins both the first body (10) and the second body (12) so that a rigid joint between the first body (10) and the second body (12) is established. The weld seam (14) further has an end section (18) which adjoins the first body (10) and has a free end (20) which is spaced apart from the second body (12). In addition, a laser welding apparatus (3) and a method for manufacturing a laser-welded joint are disclosed.

## Description

The present disclosure relates to a component comprising a first body, a second body and a weld seam, to a laser welding apparatus and to a method for manufacturing a laser welded joint between a first body and a second body of a component.

Conventional laser welded joint may suffer from defects such as holes, microcracks or discontinuities. Such defects can adversely affect the mechanical stability of the laser welded joint.

It is an object disclosure to provide a component with an improved welded joint.

This object is achieved by means of a component, a laser welding apparatus and a method according to the independent claims.

Advantageous embodiments and developments of the component, the apparatus and the method are specified in the respective dependent claims, in the following description, and the accompanying drawings.

According to a first aspect, a component is disclosed. Sometimes, a component is also denoted as a workpiece. The component comprises a first body, a second body and a weld seam. The first body and the second body are in particular metal parts and may be expediently be separately manufactured. The weld seam is in particular a continuous weld seam.

The weld seam has a main section which adjoins both the first body and the second body in such fashion that a rigid joint - specifically a welded joint - between the first and the second the body is established. The weld seam further has an end section, which adjoins the first body and has a free end which is spaced apart from the second body. The free end is preferably also spaced apart from the main section of the weld seam. The free end of the end section is in particular also an end of the weld seam. The free end of the end section is in one embodiment the only free end of the weld seam.

According to a second aspect, a laser welding apparatus is disclosed. The laser welding apparatus is operable to illuminate a component - in particular the component according to an embodiment of the first aspect - with a laser beam for manufacturing a laser welded joint between a first body and a second body of the component. The laser welding apparatus comprises an optics assembly. The optics assembly has an optical axis and comprises a lens. The lens is operable to focus the laser beam. The lens is tiltable with respect to the optical axis. In particular, tilting the lens relative to the optical axis contributes to manufacture the end section when the laser welding apparatus is operated to produce the weld seam.

According to a third aspect, a method for manufacturing a laser welded joint between the first body and the second body of a component - in particular of the component according to an embodiment the first aspect - is disclosed. According to one step of the method, the first body and the second body are positioned so that they adjoin one another along a common interface. According to a further step of the method, a continuous weld seam is produced by means of a focused laser beam.

For producing the continuous weld seam, a focus area of the focused laser beam is moved relative to the component along at least a portion of the interface so that material of the first body and/or of the second body is melted at the interface to produce a main section of the weld seam. Subsequently the focus area is moved relative to the component away from the interface to a position on the first body which is spaced apart from the second body - and in particular from the main section of the weld seam - so that material of the first body is melted to produce an end section of the weld seam. That the focus area of the focused laser beam is moved relative to the component is in particular understood to mean that, in a predetermined fixed coordinate system, the focus area is displaced, or the component is displaced, or both the focus area and the component are displaced for changing the position of the focus area relative to the component.

The inventors have found out that defects are often produced in that region of the weld seam where the laser energy is ramped down to finish the production of the weld seam. The defects may in particular be produced during the collapse of the so-called "keyhole" during this reduction of the laser power. The expression keyhole is well known to a person skilled in the art and in particular denotes a region where the laser beam heats a spot of the component up to vaporization temperature when it hits the surface of the component and forms a vapour cavity in the weld material due to the escaping metal vapour.

The invention makes use of the idea to move the position where the keyhole collapses away from the interface between the first body and the second body. In this way, the main section of the weld seam may have a particular good mechanical stability and/or a particular small number and/or size of defect structures such as holes, microcracks or discontinuities so that a particularly stable welded joint is achievable. Defects due to, for example, the breakdown of the keyhole which may be present in the end section of the weld seam have particularly small adverse effects on the stability of the welded joint. The defects in this area do not have to be minimized, so that the laser energy can be ramped down particularly fast without deteriorating the stability of the welded joint although a fast ramp-down may promote the generation of defects in the region where the keyhole collapses. Further, by means of tilting the lens, the focus area is moved also in a direction along the optical axis and in particular away from the component and towards the lens. The inventors have found out, that a particularly small number and/or size of the defects are achievable by means of such defocusing. In summary, the component is cost-effectively manufacturable, in particular by the apparatus and/or the method. Small cycle times for the laser welding process are achievable. In addition, the risk for defects in the main section which may deteriorate the mechanical stability of the welded joint is particularly small.

In one embodiment, the component has a longitudinal axis and the main section of the weld seam extends partially or completely circumferentially around the longitudinal axis. In particular, the main section merges with a circumferential surface of the first body and with the circumferential surface of the second body. Preferably, the main section of the weld seam has an annular shape. The first body and the second body are in particular arranged subsequently - preferably coaxially - along the longitudinal axis. A main extension plane of the main section of the weld seam is preferably perpendicular to the longitudinal axis. An interface of the first body and the second body is in particular at least partially positioned in said main extension plane.

In one embodiment, the end section has a second end which merges with the main section. The free end is in particular the end where the laser energy is ramped down and keyhole collapses during the production process of the weld seam. Preferably, the free end is axially offset along the longitudinal axis with respect to the second end in longitudinal direction away from the second body. In this way the distance of the defects which may be present in the region of the free end, for example due to the keyhole breakdown, is particularly large. The free end and the second end may, in addition to being longitudinally offset with respect to one another, also be angularly offset relative to one another with respect to a rotation along the longitudinal axis. For example, the end section has a helical shape. A helical shape in the present context also comprises a shape representing less than one turn of a helix.

According to one aspect, the fluid injection valve with the component is disclosed. According to a further aspect, a sensor, in particular, a fuel sensor, with the component is disclosed. Welded joints according the present disclosure are particularly advantageous for components of fuel injectors, such as gasoline injection valves, or for fuel sensors. For example, the component is a needle assembly for a fluid injection valve. In this case, the first and second bodies are in particular represented by needle shaft and a sealing element - such as a sealing ball - of the needle assembly. In another development, the component is a valve body for a fluid injection valve, e.g. a fuel injection valve. In this case, the first and second bodies are in particular represented by individual parts of the valve body, such as longitudinally subsequent, generally tubular portions of the valve body.

According to one embodiment, the laser welding apparatus comprises a rotating assembly for rotating the component around the longitudinal axis. The longitudinal axis may expediently extend obliquely or perpendicular to the optical axis of the optics assembly. Preferably, the longitudinal axis intersects the optical axis. In this way, weld seams having main sections which extend circumferentially around the longitudinal axis of the component are particularly well manufacturable.

According to one embodiment, the optics assembly comprises an actuator which is operable to tilt the lens with respect to the optical axis. Further, the rotating assembly comprises a workpiece holder to which the component is attachable and to which the component is positionally - and, thus, in particular rotationally - fix during manufacturing of the laser-welded joint. The work piece holder, together with the component, is rotatable around the longitudinal axis.

According to one development the laser welding apparatus comprises a control assembly which is configured to determine an angular position of the workpiece holder and to control the actuator for setting a predetermined inclination angle of the lens with respect to the optical axis in dependence on said angular position. For example, the control assembly is operable to tilt the lens relative to the optical axis for moving the focus area away from the optical axis when the workpiece holder made a complete turn for producing a completely circumferential main section of the weld seam.

In an expedient embodiment, the laser welding apparatus further comprises a clamping assembly which is operable to transfer a force in longitudinal direction on the component for pressing the component against the workpiece holder and for pressing the second body against the first body, or vice versa. In this way, in particularly precise positioning of the component for the laser welding operation is achievable.

In one embodiment of the method, the focus area is moved relative to the component by rotating the component around the longitudinal axis and maintaining the focus area at a fixed position on the optical axis for producing the main section of the weld seam. Alternatively or additionally, the focus area is moved relative to the component by rotating the component around the longitudinal axis and by moving the focus area away from the optical axis in a direction along the longitudinal axis, in particular by tilting the lens.

Further advantages, advantageous embodiments and developments of the component, the laser welding apparatus and the method will become apparent from the exemplary embodiments which are described below in association with schematic figures.

In the figures:
- Figure 1a: shows a component according to a first exemplary embodiment in a side view,
- Figure 1b: shows a detail of the component of the first embodiment in a side view,
- Figure 2: shows a component according to a second exemplary embodiment,
- Figure 3: shows a schematic side view of an exemplary embodiment of a laser welding apparatus for performing an exemplary method for manufacturing a laser welded joint, and
- Figure 4: shows a schematic section view of an optic assembly of the laser welding apparatus of figure 3.

In the exemplary embodiments and figures, similar, identical or similarly acting elements are provided with the same reference symbols. The figures are not regarded to be true to scale. Rather, individual elements in the figures may be exaggerated in size in one or more dimensions for better representability and/or better understanding.

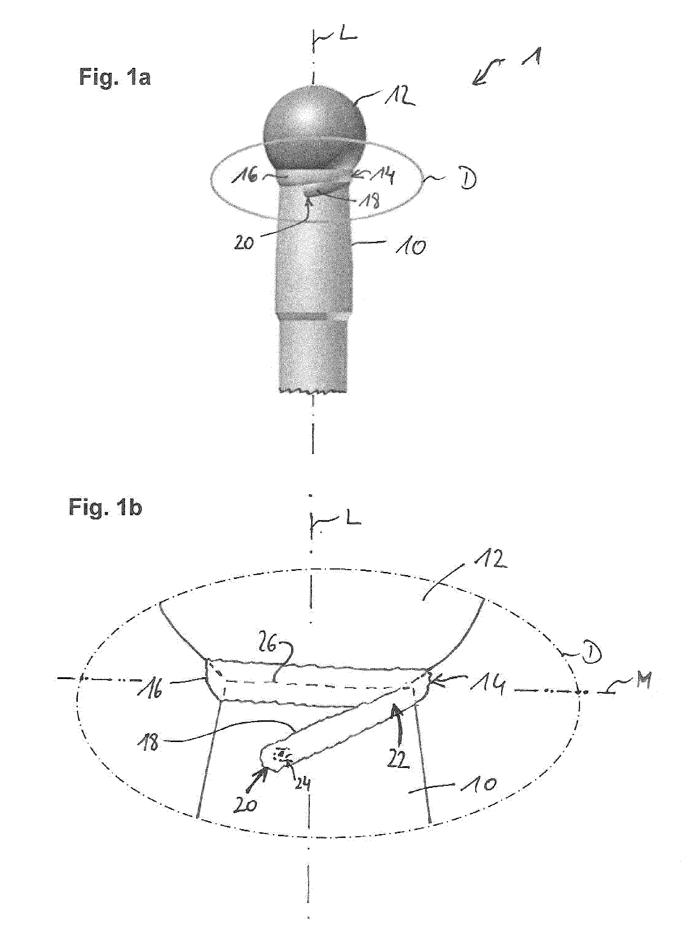

Figure 1a shows a section of a component 1 in a side view onto a longitudinal axis L of the component 1. Figure 1b shows an enlarged view of a detail D of the component 1.

The component 1 has a first body 10 and a second body 12. Both are, for example, made from a stainless steel. In the present exemplary embodiment, the first body 10 is s shaft of a needle assembly for a fluid injection valve and the second body 12 is a sealing element, specifically a sealing ball, of the needle assembly. The first body 10 and the second body 12 in this or other embodiments of the component 1 are separately manufactured parts which are positioned adjacent to one another, and in particular adjoining one another, at a common interface 26. The first and second bodies 10, 12 are arranged subsequently to one another along the longitudinal axis.

The first body 10 and the second body 12 are connected by a rigid joint at their common interface 26. More specifically, the rigid joint is a welded joint which is established by means of a weld seam 14. The weld seam 14 is in particular formed by means of melting a region of the first body 10 and/or a region of the second body 12 adjacent to the common interface 26.

The weld seam 14 has a main section 16 which longitudinally overlaps the interface 26 and adjoins both the first body 10 and the second body 12. The main section 16 of the weld seam 14 bridges the interface 26 such that the first body 10 and the second body 12 are mechanically stably connected to one another. The main section 16 of the weld seam 14 extends completely circumferentially around the longitudinal axis L so that it has an annular shape. Opposite longitudinal ends of the main section 16 adjoin an outer surface of the first body 10 and the second body 12, respectively. A main plane of extension M of the main section 16 of the weld seam 14 is perpendicular to the longitudinal axis L and preferably comprises the common interface 26.

Further, the weld seam 14 has an end section 18 which extends between a free end 20 and a second end 22 where the end section 18 merges with the main section 16. The free end 20 of the end section 18 is at the same time a free end of the weld seam 14, in particular the only free end of the weld seam 14.

The end section 18 in particular extends from the second end 22, where it merges with the main section 16, in curved fashion along an outer surface of the first body 10. The end section 18 is in particular produced by melting material of the first body 10. In the present embodiment, the end section 18 has a helical shape, the free end 20 and the second end 22 being axially and angularly offset with respect to the longitudinal axis L. More specifically, the free end 20 is positioned further away from the second body 20 than the second end 22 in longitudinal direction L. In particular, the free end 20 is longitudinally spaced apart from the main section 16 of the weld seam 14.

In this way, defects 24 which may occur at the free end 20 due to the production process of the weld seam 14 are spaced apart from the main section 16 so that the risk that the defects 24 adversely affect the mechanical stability of the welded joined is particularly small.

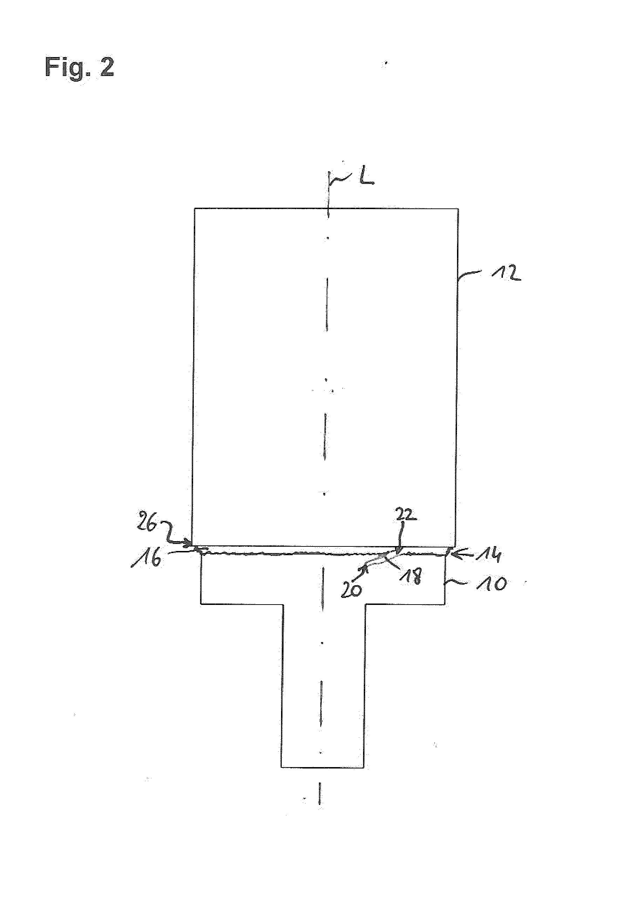

Figure 2 shows a schematic side view of a component 1 according to a second exemplary embodiment. The component 1 of the second exemplary embodiment is a valve body for a fluid injection valve.

The first body 10 is shifted into the second body 12 so that the first body 10 and the second body 12 overlap longitudinally.

At a common interface 26 the first body 10 and the second body 12 are rigidly connected by the main section 16 of the weld seam 14 bridging a step which is shaped by the outer surfaces of the first and second bodies 10, 12 in the region of the common interface 26. Analogously to the first exemplary embodiment, the end section 18 of the weld seam 14 extends from the second end 22 where the end section 18 emerges from the main section 16 to the free end 20 which is positioned on the first body 10 and longitudinally spaced apart from the second body 12 and from the main section 16 of the weld seam 14.

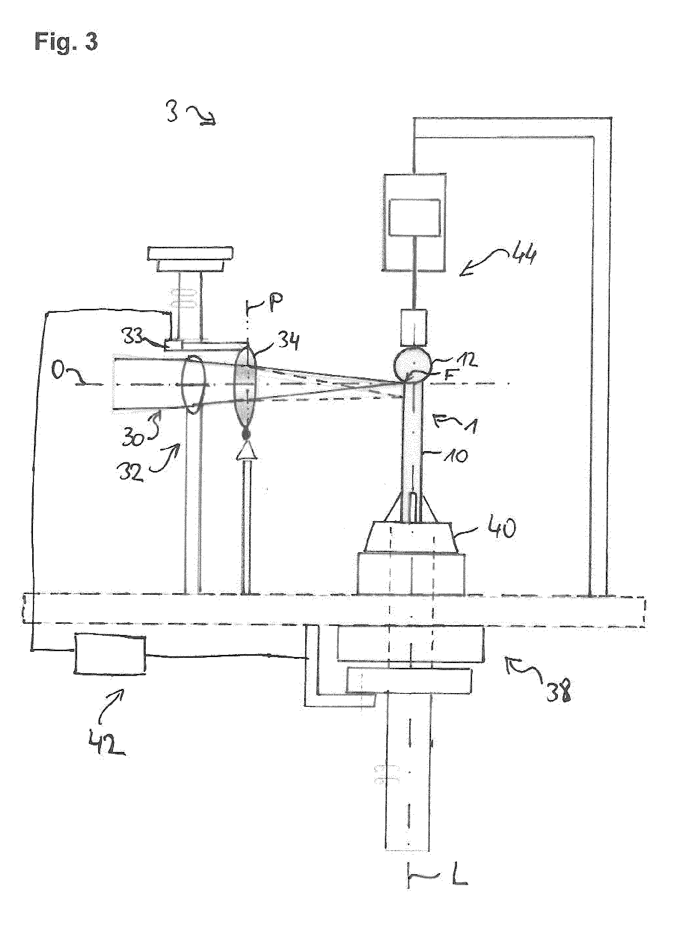

Figure 3 shows a schematic side view of a laser welding apparatus 3 which is operable to produce the welded joint of the components 1 according to the previously described embodiments and of other components 1.

The laser welding apparatus 3 comprises an optics assembly 32 which is operable to receive a laser beam 30 from a laser source and to focus the laser beam 30 in a focus area F. In one embodiment, the laser welding apparatus 3 also comprises the laser source.

Further, the laser welding apparatus 3 comprises a rotating assembly 38 which comprises a workpiece holder 40. The component 1 is attachable to the workpiece holder 40. For manufacturing the laser welded joint, for example the first body 10 is attached to the workpiece holder 40 and the second body 12 is positioned on the first body 10 so that the first and second bodies 10, 12 adjoin one another at the common interface 26. The laser welding apparatus 3 comprises a clamping assembly 44 by means of which the second body 12 is pressed onto the first body 10 so that the bodies are positionally fix with respect to one another and with respect to the workpiece holder 40 during manufacturing the laser welded joint. By means of the rotating assembly 38 the component is rotatable around the longitudinal axis L.

The optics assembly 32 and the rotating assembly 38 are positioned such that the focus area F of the laser beam 30 is on or close to an outer surface of the component 1 in the region of the interface 26. Preferably, an optical axis O of the optics assembly 32 intersects the interface 26 and/or the longitudinal axis L. In the present embodiment, the optical axis O of the optics assembly 32 is perpendicular to the longitudinal axis L.

During manufacturing the weld seam 14, the component 1 is mounted positionally and rotationally fix to the workpiece holder 40. The workpiece holder rotates so that the component 1 is rotated around its longitudinal axis L.

The component 1 is illuminated with the laser beam 30 and the optics assembly 32 is operated to maintain the focus area F at a fixed position on the optical axis O for manufacturing the main section 16 of the weld seam 14. By means of maintaining the focus area F at the fixed position on the optical axis O and rotating the component 1 around the longitudinal axis, the focus area F of the focused laser beam 30 is moved relative to the component 1 along the interface 26. It is also conceivable to maintain the focus area F at a fixed off-axis position with respect to the optical axis O. However, particularly good focusing of the laser beam 30 may be achievable when the focus area F is on the optical axis O.

During this relative movement, the laser beam 30 melts material of the first body 10 and/or the second body 12 in the region of the focus area F at the interface 26 so that the main section 16 of the weld seam 14 is produced when the melted material has solidified again. The solidified melt in the main section 16 bridges the interface 26 to connect the first body 10 and the second body 12. Expediently, the laser energy 30 is selected such that a keyhole is produced in the focus area F where material of the first body 10 and/or of the second body 12 is vaporized.

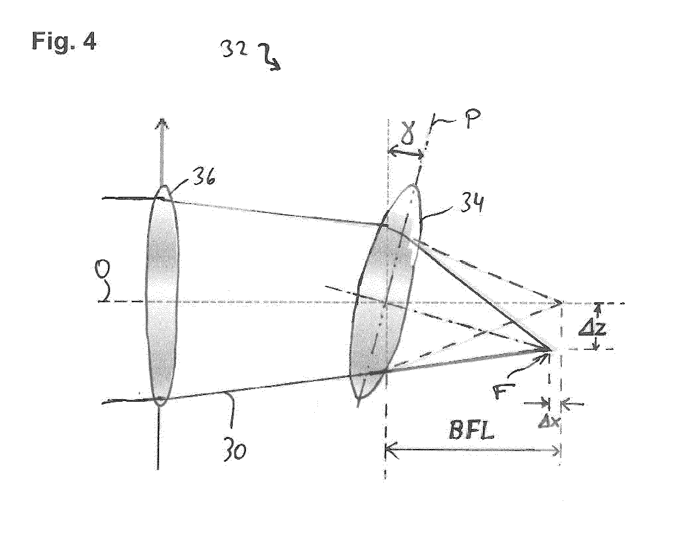

For manufacturing the end section 18, the optics assembly 32 comprises a tiltable lens 34. By means of the tiltable lens 34, the focus area F of the laser beam 30 can be moved away from the optical axis O. This is roughly indicated by dashed lines extending between the lens 34 and the first body 10 in figure 3 and shown in more detail in the section view of figure 4 which shows the tiltable lens 34 and a further lens 36 of the optics assembly.

For example, the laser beam 30 is led through the further lens 36 to the tiltable lens 34. When the principal plane P of the tiltable lens 30 is perpendicular to the optical axis O, the focus area F is on the optical axis as indicated by the dashed lines in figure 4 (and the solid lines of the laser beam 30 in figure 3) . By means of tilting the principal plane P of the tiltable lens 34 by an angle γ, the focus area F is moved away from the optical axis by a distance Δz perpendicular to the optical axis O. Since the tiltable lens 34 has a constant back focal length BFL, the focus area F is also moved in a direction along the optical axis by an amount Δx towards the tiltable lens 34.

In order to produce the end section 18 of the weld seam 14, the rotation of the component 1 around the longitudinal axis L is continued and, in addition, the principal plane P of the tiltable lens 34 is tilted gradually away from its perpendicular position with respect to the optical axis O. In this way, the focus area F is moved in angular direction relative to the component 1 by means of the rotation of the component 1 around the longitudinal axis L and it is moved in longitudinal direction with respect to the component 1 by means of the tilting of the lens 34. Thus, the focus area F is moved from a position adjacent to the interface 26 - corresponding to the second end 22 of the end section 18 - to a position on the first body 10 which is spaced apart from the second body 12 and from the main section 16 of the weld seam 14 - that position corresponding to the free end 20 of the end section 18. On its way from the second end 22 to the free end 20, the focused laser beam 30 melts material of the first body so that the end section 18 is produced.

When the weld seam 14 is produced in this or in other embodiments of the method, the production of the end section 18 preferably directly succeeds the production of the main section 16 - in particular without reducing the power of the laser beam 30. Expediently, only when the focus area F has reached the position corresponding to the free end 20 of the end section 18, the laser energy is ramped down. Defects 24 maybe produced during ramp down of the laser energy in the region of the free end 20, in particular due to the breakdown of the keyhole.

Preferably, the optics assembly 32 comprises an actuator 33 which is operable to tilt the lens 34 with respect to the optical axis O. The actuator 33 may be controlled in dependence on the angular position of the workpiece holder 40 with respect to the longitudinal axis L. In particular, the laser welding apparatus 3 comprises a controller assembly 42 which is operable to determine the angular position of the workpiece holder 40 and to control the actuator 33 to set a predetermined tilt angle γ of the lens 34 with respect to the optical axis O in dependence on the said angular position. In this way, the rotating movement of the component 1 and the displacement of the focus area F of the laser beam 30 can be coordinated to produce a predetermined shape of the weld seam on the component 1. For example, it can be guaranteed that the interface 26 is illuminated during a complete turn of the component 1 for producing an annular main section 16 of the weld seam 14 which extends completely circumferentially around the component 1. The tilt of lens 34 to move the focus area away from the optical axis O may in particular be controlled to start when the focus area F has returned to the position on the component 1 where the production of the main section 16 has started, i.e. the so-called extinction zone.

## Claims

1. A component (1) comprising a first body (10), a second body (12) and a weld seam (14),
**characterized in that**
the weld seam (14) has a main section (16) which adjoins both the first body (10) and the second body (12) so that a rigid joint between the first body (10) and the second body (12) is established and
the weld seam (14) has an end section (18) which adjoins the first body (10) and has a free end (20) which is spaced apart from the second body (12).

2. The component (1) of the preceding claim, wherein the component (1) has a longitudinal axis (L) and the main section (16) of the weld seam (14) extends partially or completely circumferentially around the longitudinal axis (L).

3. The component (1) of the preceding claim, wherein the main section (16) of the weld seam (14) has an annular shape.

4. The component (1) of one of claims 2 and 3, wherein the first body (10) and the second body (12) are arranged subsequently, in particular coaxially, along the longitudinal axis (L) and a main extension plane (M) of the main section (16) of the weld seam (14) is perpendicular to the longitudinal axis (L).

5. The component (1) of one of the preceding claims, wherein the end section (18) has a second end (22) which merges with the main section (16).

6. The component (1) of one of claims 2 to 4, wherein the end section (18) has a second end (22) merging with the main section (16), the second end (22) being longitudinally and angularly offset relative to the free end (20).

7. The component (1) of one of the preceding claims, wherein the end section (18) has a helical shape.

8. The component (1) of one of the preceding claims, wherein the component (1) is a needle assembly for a fluid injection valve, the first and second bodies (10, 12) being in particular represented by a needle shaft and a sealing ball of the needle assembly, or the component (1) is a valve body for a fluid injection valve, the first and second bodies (10, 12) being in particular represented by individual parts of the valve body.

9. Fluid injection valve or fuel sensor comprising a component (1) according to one of the preceding claims.

10. Laser welding apparatus (3) being operable to illuminate a component (1) with a laser beam (30) for manufacturing a laser-welded joint between a first body (10) and a second body (12) of the component (1), the laser welding apparatus (3) comprising an optics assembly (32) wherein the optics assembly (32) has an optical axis (O) and comprises a lens (34) which is operable to focus the laser beam (30), **characterized in that**
the lens (34) is tiltable with respect to the optical axis (O).

11. The laser welding apparatus (3) of the preceding claim, further comprising a rotating assembly (38) for rotating the component (1) around a longitudinal axis (L) which extends obliquely or perpendicular to the optical axis (O) and preferably intersects the optical axis (O).

12. The laser welding apparatus (3) of the preceding claim,
wherein
- the optics assembly (32) comprises an actuator (33) which is operable to tilt the lens (34) with respect to the optical axis (O),
- the rotating assembly (38) comprises a workpiece holder (40) to which the component (1) is attachable and to which the component (1) is positionally fix during establishing the laser-welded joint, the workpiece holder (40) being rotatable around the longitudinal axis (L), and
- the laser welding apparatus comprises a control assembly (42) which is configured to determine an angular position of the workpiece holder (40) and to control the actuator (33) for setting a predetermined tilt angle (γ) of the lens (34) with respect to the optical axis (O) in dependence on said angular position.

13. The laser welding apparatus (3) of the preceding claim, further comprising a clamping assembly (44) which is operable to transfer a force in longitudinal direction on the component (1) for pressing the component (1) against the workpiece holder (40) and for pressing the second body (12) against the first body (10) or vice versa.

14. Method for manufacturing a laser-welded joint between a first body (10) and a second body (12) of a component (1), the method comprising positioning the first and second bodies (10, 12) so that they adjoin one another along a common interface (26) and producing a continuous weld seam (14) by means of a focused laser beam (30),
wherein
a focus area (F) of the focused laser (30) beam is moved relative to the component (1) along at least a portion of the interface (26) so that material of the first and/or second body (10, 12) is melted at the interface (26) to produce a main section (16) of the weld seam (14) and the focus area (F) is subsequently moved relative to the component (1) away from the interface (26) to a position on the first body (10) which is spaced apart from the second body (12) so that material of the first body (10) is melted to produce an end section (18) of the weld seam (14).

15. The method of the preceding claim, wherein, for producing the main section (16) of the weld seam (14), the focus area (F) is moved relative to the component (1) by rotating the component (1) around a longitudinal axis (L) and maintaining the focus area (F) at a fixed position on a predetermined optical axis (O) and, for producing the end section (18), the focus area (F) is moved relative to the component (1) by rotating the component (1) around the longitudinal axis (L) and the by moving the focus area (F) away from the optical axis (O) in a direction along the longitudinal axis (L).
